# EUROPÄISCHE PATENTSCHRIFT

(11) **EP 1 274 805 B1**
(45) Veröffentlichungstag und Bekanntmachung des Hinweises auf die Patenterteilung: **27.12.2006**
(21) Anmeldenummer: 01911758.9
(22) Anmeldetag: 10.03.2001
(51) Int. Cl.: C09D 133/06, C09D 151/00

(54) **VERFAHREN ZUR HERSTELLUNG WÄSSRIGER PRIMÄRDISPERSIONEN UND BESCHICHTUNGSSTOFFE UND DEREN VERWENDUNG**
PROCESS FOR PREPARING AQUEOUS PRIMARY DISPERSIONS AND COATING AGENTS AND THEIR USE
PROCEDE DE PREPARATION DES DISPERSIONS PRIMAIRES ET AGENTS D'ENDUCTION AQUEUX ET LEUR UTILISATION

(30) Priorität: 14.04.2000 DE 10018601
(43) Veröffentlichungstag der Anmeldung: 15.01.2003
(73) Patentinhaber: BASF Coatings AG, 48165 Münster (DE)
(72) Erfinder: BENDIX, Maximilian, 59302 Oelde (DE); RINK, Heinz-Peter, 48153 Münster (DE); WESSLING, Elisabeth, 48282 Emsdetten (DE); CLAUSS, Reinhold, 48565 Steinfurt (DE); NICHOLAUS, Ralf, 48317 Drensteinfurth (DE)
(86) Internationale Anmeldenummer: PCT/EP2001/002707
(87) Internationale Veröffentlichungsnummer: WO 2001/079366

(56) Entgegenhaltungen:
- EP-A- 0 755 946
- US-A- 4 636 545
- US-A- 5 565 508
- US-A- 5 969 030

## Beschreibung

Die vorliegende Erfindung betrifft die Herstellung wäßriger Primärdispersionen und Beschichtungsstoffe, die dispergierte und/oder emulgierte, feste und/oder flüssige Polymerpartikel und/oder dispergierte feste Kern-Schale-Partikel eines Teilchendurchmessers ≤500 nm enthalten. Außerdem betrifft die vorliegende Erfindung ein Verfahren zur Herstellung der wäßrigen Primärdispersionen und Beschichtungsstoffe durch die kontrollierte radikalische Mikro- und Miniemulsionspolymerisation. Des weiteren betrifft die vorliegende Erfindung die Verwendung der wäßrigen Primärdispersionen und Beschichtungsstoffe zur Herstellung ein- oder mehrschichtiger Klarlackierungen und ein- oder mehrschichtiger farb- und/oder effektgebender Lackierungen in der Automobilerst- und -reparaturlackierung, der industriellen Lackierung, inklusive Container Coating, Coil Coating und der Beschichtung elektrotechnischer Bauteile, der Beschichtung von Bauwerken im Innen- und Außenbereich, der Fenster- und Türlackierung und der Möbellackierung.

Mikro- und Miniemulsionen sind Dispersionen aus Wasser, einer Ölphase und einer oder mehreren oberflächenaktiven Substanzen, die eine Tröpfchengrößen von 5 bis 50 nm (Mikroemulsionen) oder von 50 bis 500 nm aufweisen. Dabei gelten Mikroemulsionen als thermodynamisch stabil, wogegen die Miniemulsionen als metastabil angesehen werden (vgl. Emulsion Polymerization and Emulsion Polymers, Editoren. P. A. Lovell und Mohamed S. El-Aasser, John Wiley and Sons, Chichester, New York, Weinheim, 1997, Seiten 700 und folgende; Mohamed S. El-Aasser, Advances in Emulsion Polymerization and Latex Technology, 30^{th} Annual Short Course, Volume 3, June 7-11, 1999, Emulsion Polymers Institute, Lehigh University, Bethlehem, Pennsylvania, U.S.A.). Beide Arten von Dispersionen finden in der Technik breite Anwendung beispielsweise in Reinigern, Kosmetika oder Körperpflegeprodukten. Sie können aber auch anstelle der üblichen Makroemulsionen, bei denen Tröpfchengrößen > 1.000 nm vorliegen, für Polymerisationsreaktionen verwendet werden.

Die Herstellung wäßriger Primärdispersionen mit Hilfe der radikalischen Miniemulsionspolymerisation ist beispielsweise aus der internationalen Patentanmeldung WO 98/02466 oder den deutschen Patentschriften DE 196 28 143 A 1 und DE 196 28 142 A 1 bekannt. Bei diesen bekannten Verfahren können die Monomeren in der Gegenwart unterschiedlicher niedermolekularer, oligomerer oder polymerer hydrophober Substanzen, die auch als Costabilisatoren bezeichnet werden, copolymerisiert werden. Außerdem können hydrophobe, in Wasser wenig lösliche organische Hilfsmittel wie Weichmacher, Verbesserer der Klebrigkeit der resultierenden Verfilmung, Filmbildehilfsmittel oder sonstige nicht näher spezifizierte organische Additive in die Monomertröpfchen der Miniemulsion eingearbeitet werden. Die Verwendung der bekannten wäßrigen Primärdispersionen für die Herstellung von Beschichtungsstoffen geht aus den Patentschriften nicht hervor.

Wäßrige Beschichtungsstoffe auf der Basis von wäßrigen Primärdispersionen, die feste Kern-Schale-Partikel enthalten und durch Miniemulsionspolymerisation von Monomeren in der Gegenwart hydrophober Polymere hergestellt worden sind, sind aus den Patentanmeldungen EP 0 401 565 A 1, WO 97/49739 oder EP 0 755 946 A 1 bekannt. Obwohl die bekannten Beschichtungsstoffe bereits zahlreiche vorteilhafte Eigenschaften aufweisen, treten noch immer Probleme auf, die mit einer unzureichenden Verteilung der Vernetzungsmittel in den wäßrigen Dispersionen verbunden sind. Dies führt insbesondere dazu, daß eine größere Menge an Vernetzungsmitteln verwendet werden muß, als theoretisch notwendig wäre. Unumgesetzte Vernetzungsmittel können dann u. U. die anwendungstechnischen Eigenschaften der aus den Beschichtungsstoffen hergestellten Beschichtungen schädigen.

Die Mikroverkapselung hydrophober organischer Lösemittel oder von Zielmaterialien wie Bioziden und Herbiziden in wasserunlöslichen Kern-Schale-Partikeln, hergestellt durch Miniemulsionspolymerisation, ist aus den Patentschriften EP 0 203 724 A 1 oder US 4,677,003 A 1 bekannt. Die (Co)Polymerisation wird jedoch nicht in der Gegenwart von hydrophoben Vernetzungsmitteln für die aus den Monomeren gebildeten (Co)Polymerisate durchgeführt.

Aus den Patentanmeldungen EP 0 622 389 A 1 oder DE 43 14 297 A 1 ist die (Co)Polymerisation von Monomeren in der Gegenwart von blockierten Polyisocyanaten und von Epoxidharzen bekannt. Es wird indes nicht die Technik der Miniemulsionspolymerisation angewandt. Ein vergleichbares Verfahren geht aus den Patentanmeldungen EP 0 758 347 A I oder WO 95/29944 hervor. Die entsprechenden bekannten (Co)Polymerisate bzw. ihre Primärdispersionen werden zur Herstellung von Beschichtungsstoffen verwendet. Die bekannten Beschichtungsstoffe weisen ebenfalls die Probleme auf, die mit einer nicht ausreichend feinen Verteilung der Vernetzungsmittel in den Beschichtungsstoffen verbunden sind.

Des weiteren ist die für die Herstellung von Acrylatcopolymerisaten angewandte radikalische Polymerisation häufig sehr exotherm und schwer zu regeln. Für die Reaktionsführung bedeutet dies, daß hohe Konzentrationen an Monomeren und/oder die sogenannte Batch-Fahrweise, bei der die gesamte Menge der Monomeren in einem wäßrigen Medium vorgelegt, emulgiert und anschließend auspolymerisiert wird, vermieden werden müssen. Auch die gezielte Einstellung definierter Molekulargewichte, Molekulargewichtsverteilungen und anderer Eigenschaften bereitet häufig Schwierigkeiten. Die gezielte Einstellung eines bestimmten Eigenschaftsprofils von Acrylatcopolymerisaten ist aber für ihre Verwendung als Bindemittel in Beschichtungsstoffen, insbesondere wäßrigen Beschichtungsstoffen, von großer Bedeutung, da hierdurch das anwendungstechnische Eigenschaftsprofil der Beschichtungsstoffe direkt beeinflußt werden kann.

Es hat daher nicht an Versuchen gefehlt, die radikalische Copolymerisation olefinisch ungesättigter Monomerer gezielt zu regeln.

So beschreibt die internationale Patentanmeldung WO 98/01478 ein Verfahren, bei dem die Copolymerisation in Gegenwart eines radikalischen Starters und einer Thlocarbonylthlo-Verbindung als Kettenübertragungsmittel durchgeführt wird.

Die internationale Patentanmeldung WO 92/13903 beschreibt ein Verfahren zur Herstellung von Copolymerisaten mit einem niedrigen Molekulargewicht durch Radikalkettenpolymerisation in Gegenwart eines Gruppenübertragungsmittels, das eine Kohlenstoff-Schwefel-Doppelbindung aufweist. Diese Verbindungen wirken nicht nur als Kettenübertragungsmittel, sondern auch als Wachstumsregler, so daß nur Copolymerisate mit niedrigem Molekulargewicht resultieren.

Aus der internationalen Patentanmeldung WO 96/15157 geht ein Verfahren zur Herstellung von Copolymerisaten mit vergleichsweise enger Molekulargewichtsverteilung hervor, bei dem ein Monomer mit einem Vinylterminierten Makromonomeren in Anwesenheit eines radikalischen Initiators umgesetzt wird.

Außerdem geht aus der internationalen Patentanmeldung WO 98/37104 die Herstellung von Acrylatcopolymerisaten mit definierten Molekulargewichten durch radikalische Polymerisation in Gegenwart eines Kettenübertragungsmittels mit einer Kohlenstoff-Kohlenstoff-Doppelbindung und mit Resten, die diese Doppelbindung bezüglich der radikalischen Anlagerung von Monomeren aktivieren, hervor.

Trotz bedeutsamer Fortschritte auf diesem Gebiet fehlt es noch immer an einem universell einsetzbaren Verfahren zur kontrollierten radikalischen Polymerisation, das in einfacher Weise chemisch strukturierte Polymerisate, insbesondere Acrylatcopolymerisate, liefert und mit dessen Hilfe das Eigenschaftsprofil der Polymerisate im Hinblick auf ihre Anwendung in Beschichtungsstoffen, insbesondere wäßrigen Beschichtungsstoffen, die der Herstellung Klarlackierungen und von farb- und/oder effektgebenden Mehrschichtlackierungen dienen, gezielt eingestellt werden kann.

In der nicht vorveröffentlichten deutschen Patentanmeldung DE 199 59 928.9 (WO 01/42379) der BASF Coatings AG mit dem internen Aktenzeichen PAT 99 174 DE und dem Titel "Wäßrige Primärdispersionen und Beschichtungsstoffe, Verfahren zu ihrer Herstellung und ihre Verwendung" werden wäßrige Primärdispersionen und Beschichtungsstoffe beschrieben, die dispergierte und/oder emulgierte, feste und/oder flüssige Polymerpartikel und/oder dispergierte feste Kern-Schale-Partikel eines Teilchendurchmesser ≤ 500 nm enthalten und durch radikalische Mikro- oder Miniemulsionspolymerisation von mindestens einem olefinisch ungesättigten Monomer (A) in der Gegenwart von zumindest einem hydrophoben Vernetzungsmittel für das aus dem Monomer oder den Monomeren (A) resultierende (Co)Polymerisat herstellbar sind. Hierbei werden indes die Monomeren (A) und die Vernetzungsmittel sowie die anderen Bestandteile der Mini- oder Mikroemulsion in organischen Lösemitteln gelöst und anschließend in einer Mischung aus Wasser und Emulgator emulgiert.

Aus der nicht vorveröwentlichten deutschen Patentanmeldung DE 199 24 674.2 (WO 00/73395) der BASF Coatings AG mit dem internen Aktenzeichen PAT 99 198 DE und dem Titel "Wäßrige Primärdispersionen und Beschichtungsstoffe, Verfahren zu ihrer Herstellung und ihre Verwendung" werden ebenfalls wäßrige Primärdispersionen und Beschichtungsstoffe beschrieben, die dispergierte und/oder emulgierte, feste und/oder flüssige Polymerpartikel und/oder dispergierte feste Kern-Schale-Partikel eines Teilchendurchmesser ≤ 500 nm enthalten und durch radikalische Mikro- oder Miniemulsionspolymerisation von einem olefinisch ungesättigten Monomer (A) und einem Diarylethylen (A) in der Gegenwart von zumindest einem hydrophoben Vernetzungsmittel für das aus den Monomeren (A) resultierende Copolymerisat herstellbar sind. Auch hier werden die Monomeren (A) und die Vernetzungsmittel sowie die anderen Bestandteile der Mini- oder Mikroemulsion in organischen Lösemitteln gelöst und anschließend in einer Mischung aus Wasser und Emulgator emulgiert.

Aufgabe der vorliegenden Erfindung ist es, wäßrige Primärdispersionen und Beschichtungsstoffe, enthaltend dispergierte und/oder emulgierte, feste und/oder flüssige Polymerpartikel und/oder dispergierte feste Kern-Schale Partikel eines Teilchendurchmessers ≤500 nm, herzustellen, die Nachteile des Standes der Technik nicht mehr länger aufweisen, sondern die sich in einfacher Weise mit einem Minimum an Emulgatoren und/oder stark hydrophoben Verbindungen herstellen lassen. Darüber hinaus sollen die wäßrigen Primärdispersionen und Beschichtungsstoffe möglichst fein verteilte Vernetzungsmittel enthalten. Die Copolymerisate, die in den wäßrigen Primärdispersionen und Beschichtungsstoffen enthalten sind, sollen definierte Molekulargewichte aufweisen und sich im Bedarfsfall auch nach der Batch-Fahrweise herstellen lassen, ohne daß hierbei die Probleme auftreten, die mit der hohen Exothermie der radikalischen Polymerisation verbunden sind, wie die thermische Schädigung der Produkte bis hin zum Durchgehen des Reaktors.

Des weiteren war es die Aufgabe der vorliegenden Erfindung, ein neues Verfahren zur Herstellung von wäßrigen Primärdispersionen und Beschichtungsstoffen durch radikalische Mikro- oder Miniemulsionpolymerisation zu finden, das die Nachteile des Standes der Technik nicht mehr länger aufweist.

Demgemäß wurde das neue Verfahren zur Herstellung wäßriger Primärdispersionen und Beschichtungsstoffe, enthaltend dispergierte und/oder emulgierte, feste und/oder flüssige Polymerpartikel und/oder dispergierte feste Kern-Schale-Partikel eines Teilchendurchmesser ≤ 500 nm gefunden, bei dem man mindestens ein olefinisch ungesättigtes Monomer (A) in der Gegenwart von zumindest einem hydrophoben Vernetzungsmittel für das aus dem Monomer oder den Monomeren (A) resultierende (Co)Polymerisat in einer Mikro- oder Miniemulsion radikalisch (co)polymerisiert, wobei man das Monomer oder die Monomeren (A) vor der (Co)Polymerisation in einer wäßrigen Dispersion des Vernetzungsmittels oder der Vernetzungsmittel dispergiert, und das im folgenden der Kürze halber als "erfindungsgemäßes Verfahren" bezeichnet wird.

Weitere erfindungsgemäße Gegenstände gehen aus der nachfolgenden Beschreibung hervor.

Im Hinblick auf den Stand der Technik war es überraschend und für den Fachmann nicht vorhersehbar, daß die Aufgabe, die der vorliegenden Erfindung zugrunde lag, durch das erfindungsgemäße Verfahren gelöst werden konnte. Insbesondere war es überraschend, daß die in den erfindungsgemäß hergestellten Primärdispersionen enthaltenen (Co)Polymerisate Eigenschaften aufweisen, die sie für die Verwendung in Beschichtungsstoffen in hohem Maße geeignet machen. Außerdem war es überraschend, daß die erfindungsgemäß hergestellten Primärdispersionen direkt als Beschichtungsstoffe verwendet werden können, wobei sie sogar weniger Vernetzungsmittel als herkömmliche Beschichtungsstoffe benötigen. Nicht zuletzt war es überraschend, daß das erfindungsgemäße Verfahren die Primärdispersionen und Beschichtungsstoffe in besonders einfacher Weise gezielt liefert, ohne daß hierbei die vorstehend beschriebenen, vom Stand der Technik her bekannten Probleme auftreten. Nicht zuletzt war es überaschend, daß die erfindungsgemäß hergestellten Primärdispersionen auch als Klebstoffe und Dichtungsmassen oder zu deren Herstellung mit Vorteil verwendbar sind.

Im Rahmen der vorliegenden Erfindung ist unter der Eigenschaft hydrophil die konstitutionelle Eigenschaft eines Moleküls oder einer funktionellen Gruppe zu verstehen, in die wäßrige Phase einzudringen oder darin zu verbleiben. Demgemäß ist im Rahmen der vorliegenden Erfindung unter der Eigenschaft hydrophob die konstitutionelle Eigenschaft eines Moleküls oder einer funktionellen Gruppe zu verstehen, sich gegenüber Wasser exophil zu verhalten, d. h., sie zeigen die Tendenz, in Wasser nicht einzudringen oder die wäßrige Phase zu verlassen. Ergänzend wird auf Römpp Lexikon Lacke und Druckfarben, Georg Thieme Verlag, Stuttgart, New York, 1998, »Hydrophilie«, »Hydrophobie«, Seiten 294 und 295, verwiesen.

Erfindungsgemäß enthalten die Primärdispersionen und Beschichtungsstoffe dispergierte und/oder emulgierte feste und/oder flüssige Polymerpartikel und/oder dispergierte feste Kern-Schale-Partikel. Die Größe der Polymerpartikel oder der dispergierten Kern-Schale-Partikel ergibt sich direkt aus dem nachfolgend beschriebenen erfindungsgemäßen Verfahren. Hierbei liegt der mittlere Teilchendurchmesser unter 500 nm. Vorzugsweise liegt er bei 10 bis 500 nm, bevorzugt 50 bis 400 nm und ganz besonders bevorzugt 100 bis 350 nm. Die erfindungsgemäßen Primärdispersionen und Beschichtungsstoffe weisen einen vorteilhaft hohen Feststoffgehalt, beispielsweise von über 20 Gew.-%, bevorzugt über 30 Gew.-%, auf Es können sogar Feststoffgehalte von über 40 Gew.-% erzielt werden. Die erfindungsgemäß hergestellten Primärdispersionen und Beschichtungsstoffe haben eine geringe Viskosität auch bei hohem Feststoffgehalt.

Die erfindungsgemäß zu verwendenden Kern-Schale-Partikel resultieren aus der Pfropfmischpolymerisation organischer Feststoffe und der nachstehend beschriebenen erfindungsgemäß zu verwendenden Monomeren (A). Vorzugsweise handelt es sich bei den organischen Feststoffen um hydrophobe Polymere, wie sie beispielsweise in den Patentschriften EP 0 401 565 A 1, Seite 3, Zeilen 5, bis Seite 4, Zeile 50, WO 97/49739, Seite 4, Zeilen 19, bis Seite 5, Zeile 3, oder EP 0 755 946 A 1, Seite 3, Zeile 26, bis Seite 5,Zeile 38, beschrieben werden. Diese hydrophoben Polymere können auch nach dem erfindungsgemäßen Verfahren hergestellt werden.

Die erfindungsgemäß hergestellten Primärdispersionen und Beschichtungsstoffe können auch eine bimodale Teilchengrößenverteilung aufweisen, bei der 0,1 bis 80 Gew.-%, insbesondere 1,0 bis 50 Gew.-%, des aus den oder den Monomeren (A) resultierenden (Co)Polymerisats eine Teilchengröße, bestimmt mit einer analytischen Ultrazentrifuge, von 20 bis 500 nm, insbesondere 50 bis 300 nm haben, und 20 bis 99,9 Gew.-%, insbesondere 50 bis 99 Gew.-% des (Co)Polymerisats, eine Teilchengröße von 200 bis 1.500 nm, insbesondere 300 bis 900 nm haben, wobei sich die Teilchengrößen um mindestens 50 nm, insbesondere um mindestens 100 nm, ganz besonders bevorzugt um mindestens 200 nm unterscheiden. Hinsichtlich der Meßmethode wird ergänzend auf die Zeilen 5 bis 9 der Seite 6 der deutschen Patentanmeldung DE 196 28 142 A 1 verwiesen.

Die erste erfindungswesentliche Ausgangsverbindung für die erfindungsgemäß hergestellten Primärdispersionen oder Beschichtungsstoffe bzw. für das erfindungsgemäße Verfahren ist mindestens ein olefinisch ungesättigtes Monomer (A).

Vorzugsweise wird hierbei mindestens ein Monomer (A) verwendet, das reaktive funktionelle Gruppen enthält, die mit den komplementären reaktiven funktionellen Gruppen der Vernetzungsmittel Vemetzungsreaktionen eingehen können. Beispiele geeigneter erfindungsgemäß zu verwendender komplementärer reaktiver funktioneller Gruppen sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest; die Variablen R und R stehen für gleiche oder verschiedene aliphatische Reste oder sind miteinander zu einem aliphatischen oder heteroaliphatischen Ring verknüpft.

### Übersicht: Beispiele komplementärer funktioneller Gruppen

| **Monomer (A) und Vernetzungsmittel (C)** | |
|---|---|
| oder | |
| **Vernetzungsmittel (C) und Monomer (A)** | |
| -SH | -C(O)-OH |
| -NH₂ | -C(O)-O-C(O)- |
| -OH | -NCO |
| -O-(CO)-NH-(CO)-NH₂ | -NH-C(O)-OR |
| -O-(CO)-NH₂ | -CH₂-OH |
| >NH | -CH₂-O-R |
| | -NH-CH₂-O-R |
| | -NH-CH₂-OH |
| | -N(-CH₂-O-R)₂ |
| | -NH-C(O)-CH(-C(O)OR)₂ |
| | -NH-C(O)-CH(-C(O)OR)(-C(O)-R) |
| | -NH-C(O)-NR'R'' |
| | > Si(OR)₂ |
| | 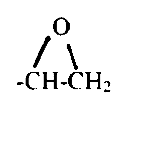 |
| | 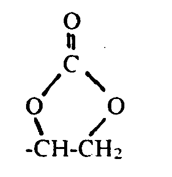 |
| -C(O)-OH | 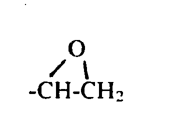 -C(O)-N(CH₂-CH₂-OH)₂ |

Die Auswahl der jeweiligen komplementären Gruppen richtet sich zum einen danach, daß sie bei der Lagerung erfindungsgemäß hergestellten Primärdispersionen oder Beschichtungsstoffe keine unerwünschten Reaktionen eingehen und/oder gegebenenfalls die Härtung mit aktinischer Strahlung nicht stören oder inhibieren dürfen, und zum anderen danach, in welchem Temperaturbereich die Vernetzung stattfinden soll.

Vorzugsweise werden bei den erfindungsgemäß hergestellten Beschichtungsstoffen Vernetzungstemperaturen von 100 bis 180°C angewandt. Es werden daher vorzugsweise Monomere (A) mit Thio-, Hydroxyl-, Alkoxymethylamino-, Imino-, Carbamat-, Allophanat- und/oder Carboxygruppen, insbesondere aber Amino-, Alkoxymethylamino- oder Hydroxylgruppen, speziell Hydroxylgruppen, einerseits und Vernetzungsmittel mit Anhydrid-, Carboxy-, Epoxy-, blockierten Isocyanat-, Urethan-, Methylol-, Methylolether-, Siloxan-, Carbonat-, Amino-, Hydroxy- und/oder beta-Hydroxyalkylamidgruppen, insbesondere aber blockierten Isocyanat-, Urethan- oder Methylolethergruppen, andererseits angewandt.

Beispiele geeigneter Monomere (A) sind
a1) im wesentlichen säuregruppenfreien (Meth)acrylsäureester wie (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)Acrylsäureoxaalkylester oder -oxacycloalkylester wie Ethyltriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)acrylsäurederivate. Diese können in untergeordneten Mengen höherfunktionelle (Meth)Acrylsäurealkyl- oder -cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3-oder-1,4-diol-di(meth)acrylat; Trimethylolpropan-di- oder - tri(meth)acrylat; oder Pentaerythrit-di-, -tri- oder -tetra(meth)acrylat enthalten. Im Rahmen der vorliegenden Erfindung sind hierbei unter untergeordneten Mengen an höherfunktionellen Monomeren solche Mengen zu verstehen, welche nicht zur Vernetzung oder Gelierung der Copolymerisate (A) führen, es sei denn, man will gezielt vernetzte polymere Mikroteilchen herstellen.
a2) Monomere, welche mindestens eine Hydroxyl-, Thio-, Amino-, Alkoxymethylamino-, Carbamat-, Allophanat- oder Iminogruppe, insbesondere eine Hydroxyl-, Amino- oder Alkoxymethylaminogruppe, pro Molekül tragen und im wesentlichen säuregruppenfrei sind, wie Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, - maleinat, -fumarat oder -itaconat, oder Hydroxycycloalkylester wie 1,4-Bis(hydroxymethyl)cyclohexan-, Octahydro-4,7-methano-1H-indendimethanol- oder Methylpropandiolmonoacrylat, -monomethacrylat, -monoethacrylat, -monocrotonat, -monomaleinat, -monofumarat oder -monoitaconat; oder Umsetzungsprodukte aus cyclischen Estern, wie z.B. epsilon-Caprolacton und diesen Hydroxyalkyl- oder -cycloalkylestern; oder olefinisch ungesättigte Alkohole wie Allylalkohol oder Polyole wie Trimethylolpropanmono- oder diallylether oder Pentaerythritmono-, -di- oder -triallylether (hinsichtlich dieser höherfunktionellen Monomeren (a2) gilt das für die höherfunktionellen Monomeren (a1) Gesagte sinngemäß); N,N-Dimethylaminoethylacrylat, N,N-Diethylaminoethylmethacrylat, Allylamin oder N-Methyliminoethylacrylat oder N,N-Di(methoxymethyl)aminoethylacrylat und -methacrylat oder N,N-Di(butoxymethyl)aminopropylacrylat und -methacrylat;
a3) Monomere, welche mindestens eine Säuregruppe, die in die entsprechende Säureaniongruppe überführbar ist, pro Molekül tragen, wie Acrylsäure, Methacrylsäure, Ethacrylsäure, Crotonsäure, Maleinsäure, Fumarsäure oder Itaconsäure: olefinisch ungesättigte Sulfon- oder Phosphonsäuren oder deren Teilester; oder Maleinsäuremono(meth)acryloyloxyethylester, Bernsteinsäuremono(meth)acryloyloxyethylester oder Phthalsäuremono(meth)acryloyloxyethylester. Im Rahmen der vorliegenden Erfindung werden die Monomeren (a3) nicht als die alleinigen Monomeren (A) verwendet, sondern stets in Verbindung mit anderen Monomeren (A) und dies auch nur in solch geringen Mengen, daß die Monomeren (a3) nicht außerhalb der Tröpfchen der Miniemulsion polymerisieren.
a4) Vinylester von in alpha-Stellung verzweigten Monocarbonsäuren mit 5 bis 18 Kohlenstoffatomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester (a4) können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, insbesondere aber Versatic^{®}-Säuren, eingesetzt.
a5) Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic^{®}-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic^{®}-Säure, umgesetzt wird.
a6) Cyclische und/oder acyclische Olefine wie Ethylen, Propylen, But-1-en, Pent1-en, Hex-1-en, Cyclohexen, Cyclopenten, Norbonen, Butadien, Isopren, Cylopentadien und/oder Dicyclopentadien.
a7) (Meth)Acrylsäureamide wie (Meth)Acrylsäureamid, N-Methyl-, N,N-Dimethyl-, N-Ethyl-, N,N-Diethyl-, N-Propyl-, N,N-Dipropyl-, N-Butyl-, N,N-Dibutyl-, N-Cyclohexyl-, N,N-Cyclohexyl-methyl- und/oder N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid;
a8) Epoxidgruppen enthaltende Monomere wie der Glycidylester der Acrylsäure, Methacrylsäure, Ethacrylsäure, Crotonsäure, Maleinsäure, Fumarsäure und/oder Itaconsäure.
a9) Vinylaromatische Kohlenwasserstoffe wie Styrol, alpha-Alkylstyrole, insbesondere alpha-Methylstyrol, und/oder Vinyltoluol; Vinylbenzoesäure (alle Isomere), N,N-Diethylaminostyrol (alle Isomere), alpha-Methylvinylbenzoesäure (alle Isomere), N,N-Diethylainino-alpha-methylstyrol (alle Isomere) und/oder p-Vinylbenzsolsulfonsäure.
a10) Diarylethylene, insbesondere solche der allgemeinen Formel I:

   **R¹R²C=CR³R⁴** (I),

   worin die Reste R¹, R² , R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen. Beispiele geeigneter Alkylreste sind Methyl, Ethyl, Propyl, Isopropyl, n-Butyl, iso-Butyl, tert.-Butyl, Amyl, Hexyl oder 2-Ethylhexyl. Beispiele geeigneter Cycloalkylreste sind Cyclobutyl, Cyclopentyl oder Cyclohexyl. Beispiele geeigneter Alkylcycloalkylreste sind Methylencyclohexan, Ethylencyclohexan oder Propan-1,3-diyl-cyclohexan. Beispiele geeigneter Cycloalkylalkylreste sind 2-, 3- oder 4-Methyl-, -Ethyl-, - Propyl- oder-Butylcyclohex-1-yl. Beispiele geeigneter Arylreste sind Phenyl, Naphthyl oder Biphenylyl, vorzugsweise Phenyl und Naphthyl und insbesondere Phenyl. Beispiele geeigneter Alkylarylreste sind Benzyl oder Ethylen- oder Propan-1,3-diyl-benzol. Beispiele geeigneter Cycloalkylarylreste sind 2-, 3-, oder 4-Phenylcyclohex-1-yl. Beispiele geeigneter Arylalkylreste sind 2-, 3- oder 4-Methyl-, -Ethyl-, -Propyl- oder - Butylphen-1-yl. Beispiele geeigneter Arylcycloalkylreste sind 2-, 3- oder 4-Cyclohexylphen-1-yl. Vorzugsweise handelt es sich bei den Arylresten R¹, R², R³ und/oder R⁴ um Phenyl- oder Naphthylreste, insbesondere Phenylreste. Die in den Resten R¹, R², R³ und/oder R⁴ gegebenenfalls vorhandenen Substituenten sind elektronenziehende oder elektronenschiebende Atome oder organische Reste, insbesondere Halogenatome, Nitril-, Nitro-, partiell oder vollständig halogenierte Alkyl-, Cycloalkyl-, Alkylcycloalkyl-, Cycloalkylalkyl-, Aryl-, Alkylaryl-, Cycloalkylaryl- Arylalkyl- und Arylcycloalkylreste; Aryloxy-, Alkyloxy- und Cycloalkyloxyreste; Arylthio-, Alkylthio- und Cycloalkylthioreste und/oder primäre, sekundäre und/oder tertiäre Amionogruppen. Besonders vorteilhaft sind Diphenylethylen, Dinaphthalinethylen, cis- oder trans- Stilben, Vinyliden-bis(4-N,N-dimethylaminobenzol), Vinyliden-bis(4-aminobenzol) oder Vinyliden-bis(4-nitrobenzol), insbesondere Diphenylethylen (DPE), weswegen sie bevorzugt verwendet werden. Im Rahmen der vorliegenden Erfindung werden die Monomeren (a10) nicht als die alleinigen Monomere eingesetzt, sondern stets gemeinsam mit anderen Monomeren (A), wobei sie die Copolymerisation in vorteilhafter Weise derart regeln, daß auch eine radikalische Copolymerisation in Batch-Fahrweise möglich ist.
a11) Nitrile wie Acrylnitril und/oder Methacrylnitril.
a12) Vinylverbindungen, insbesondere Vinyl-und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam, 1-Vinylimidazol oder N-Vinylpyrrolidon; Vinylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure.
a13) Allylverbindungen, insbesondere Allylether und -ester wie Allylmethyl-, - ethyl-, -propyl- oder -butylether oder Allylacetat, -propionat oder -butyrat.
a14) Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE 38 07 571 A 1 auf den Seiten 5 bis 7, der DE 37 06 095 A 1 in den Spalten 3 bis 7, der EP 0 358 153 B 1 aufden Seiten 3 bis 6, in der US 4,754,014 A 1 in den Spalten 5 bis 9, in der DE 44 21 823 A 1 oder in der internationalen Patentanmeldung WO 92/22615 5 auf Seite 12, Zeile 18, bis Seite 18, Zelle 10, beschrieben sind.
   und/oder
a15) Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder -cycloalkylestern der (Meth)Acrylsäure (vgl. Monomere a2).

Weitere Beispiele geeigneter Monomere (A) gehen aus der deutschen Patentanmeldung DE 196 28 142 A 1, Seite 2, Zeile 50, bis Seite 3, Zeile 7, hervor.

Jedes der vorstehend genannten Monomeren (A), ausgenommen die Monomeren (a3) und (a10), können für sich alleine polymerisiert werden, wodurch Polymerisate resultieren. Erfindungsgemäß ist es indes von Vorteil, mindestens zwei Monomere (A) zu verwenden, weil hierdurch das Eigenschaftsprofil der resultierenden Copolymerisate in besonders vorteilhafter Weise sehr breit variiert und dem jeweiligen Verwendungszweck der erfindungsgemäß hergestellten Primärdispersionen oder Beschichtungsstoffe ganz gezielt angepaßt werden kann.

Vorzugsweise werden die Monomeren (A) so ausgewählt, daß (Meth)Acrylat(co)polymerisate resultieren, deren Eigenschaftsprofil in erster Linie von den vorstehend beschriebenen (Meth)Acrylaten bestimmt wird. Als Comonomere (A) werden dann bevorzugt vinylaromatische Kohlenwasserstoffe (a9), insbesondere Styrol, verwendet.

Besondere Vorteile resultieren dann aus der Mitverwendung mindestens eines Monomeren (a10), wodurch die Copolymerisation derart geregelt werden kann, daß eine Batch-Fahrweise möglich ist und vergleichsweise niedermolekulare Produkte resultieren, die für die Verwendung in Beschichtungsstoffen besonders gut geeignet sind.

Die erfindungsgemäß zu verwendenden Monomere (A) werden in Gegenwart mindestens eines wasser- und/oder öllöslichen, Radikale bildenden Initiators miteinander zu (Co)Polymerisaten umgesetzt. Als Beispiele für einsetzbare Initiatoren werden genannt: Dialkylperoxide, wie Di-tert.-Butylperoxid oder Dicumylperoxid; Hydroperoxide, wie Cumolhydroperoxid oder tert.-Butylhydroperoxid; Perester, wie tert.-Butylperbenzoat, tert.-Butylperpivalat, tert.-Butylper-3,5,5-trimethyl- hexanoat oder tert.-Butylper-2-ethylhexanoat; Peroxodicarbonate; Kalium-, Natrium- oder Ammoniumsperoxodisulfat, Azoinitiatoren, beispielsweise Azodinitrile wie Azobisisobutyronitril; C-C-spaltende Initiatoren wie Benzpinakolsilylether; oder eine Kombination eines nicht oxidierenden Initiators mit Wasserstoffperoxid. Des können auch Kombinationen der vorstehend beschriebenen Initiatoren eingesetzt werden.

Weitere Beispiele geeigneter Initiatoren werden in der deutschen Patentanmeldung DE-A-196 28 142, Seite 3, Zelle 49, bis Seite 4, Zelle 6, beschrieben.

Vorzugsweise werden vergleichsweise große Mengen an radikalischem Initiator zugegeben, wobei der Anteil des Initiators am Reaktionsgemisch, jeweils bezogen auf die Gesamtmenge der Monomeren (A) und des Initiators, besonders bevorzugt 0,2 bis 20 Gew.-%, ganz besonders bevorzugt 0,5 bis 15 Gew.-% und insbesondere 1,0 bis 10 Gew.-% beträgt.

Erfindungsgemäß werden die Monomeren (A) in der Gegenwart mindestens eines hydrophoben Vernetzungsmittels copolymerisiert. Vorzugsweise enthalten die hydrophoben Vernetzungsmittel die vorstehend beschriebenen reaktiven funktionellen Gruppen, die mit den in den resultierenden (Co)Polymerisaten vorhandenen komplementären reaktiven funktionellen Gruppen vernetzungsreaktionen eingehen.

Beispiele besonders gut geeigneter Vernetzungsmittel sind blockierte Polyisocyanate, Tris(alkoxycarbonylamino)triazine oder vollständig veretherte Aminoplastharze.

Beispiele geeigneter Blockierungsmittel für die Herstellung der blockierten Polyisocyanate sind die aus der US-Patentschrift US-A-4,444,954 bekannten Blockierungsmittel:
i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonoethylether Ethylenglykolmonopropylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolhamstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, insbesondere Dimethylpyrazol, oder Triazole; sowie
xvii) Gemische dieser Blockierungsmittel, insbesondere Dimethylpyrazol und Triazole, Malonester und Acetessigsäureester oder Dimethylpyrazol und Succinimid.

Beispiele geeigneter zu blockierender organischer Polyisocyanate sind insbesondere die sogenannten Lackpolyisocyanate mit aliphatisch, cycloaliphatisch, araliphatisch und/oder aromatisch gebundenen Isocyanatgruppen. Bevorzugt werden Polyisocyanate mit 2 bis 5 Isocyanatgruppen pro Molekül und mit Viskositäten von 100 bis 10.000, vorzugsweise 100 bis 5000.

Weitere Beispiele für geeignete zu blockierende Polyisocyanate sind in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben. Beispielsweise geeignet sind die isocyanatgruppenhaltigen Polyurethanpräpolymere, die durch Reaktion von Polyolen mit einem Überschuß an Polyisocyanaten hergestellt werden können und die bevorzugt niederviskos sind.

Weitere Beispiele geeigneter zu blockierender Polyisocyanate sind Isocyanurat-, Biuret-, Allophanat-, Iminooxadiazindion-, Urethan-, Harnstoff- und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, Dicyclohexylmethan-2,4'-diisocyanat, Dicyclohexylmethan-4,4'-diisocyanat, Diisocyanate, abgeleitet von Dimerfettsäuren, wie sie unter der Handelsbezeichnung DD1 1410 von der Firma Henkel vertrieben und in den Patentschriften DO 97/49745 und WO 97/49747 beschrieben werden insbesondere 2-Heptyl-3,4-bis(9-isocyanatononyl)-1-pentylcyclohexan; oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4- oder 1,3-Bis(4-isocyanatobut-1-yl)cyclohexan, 1,8-Diisocyanato-4-isocyanatomethyl-octan, 1,7-Diisocyanato-4-isocyanatomethyl-heptan oder 1-Isocyanato-2-(3-isocyanatopropyl)cyclohexan oder Mischungen aus diesen Polyisocyanaten eingesetzt.

Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Insbesondere wird das mit 3,5-Dimethylpyrazol blockierte Isocyanurat von Hexamethylendiisocyanat eingesetzt.

Beispiele für besonders gut geeignete Aminoplastharze sind Melaminharze, Guanaminharze oder Harnstoffharze. Hierbei kann jedes für Klarlacke geeignete Aminoplastharz oder eine Mischung aus solchen Aminoplastharzen verwendet werden. Ergänzend wird auf Römpp Lexikon Lacke und Druckfarben, Georg Thieme Verlag, 1998, Seite 29, »Aminoharze«, und das Lehrbuch "Lackadditive" von Johan Bieleman, Wiley-VCH, Weinheim, New York, 1998, Seiten 242 ff., oder auf das Buch "Paints, Coatings and Solvents", second completely revised edition, Edit. D. Stoye und W. Freitag, Wiley-VCH, Weinheim, New York, 1998, Seiten 80 ff., verwiesen. Des weiteren kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US 4 710 542 A 1 und EP 245 700 B 1 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Die besonders gut geeigneten Tris(alkoxycarbonylamino)triazine wiesen die folgende Formel auf:

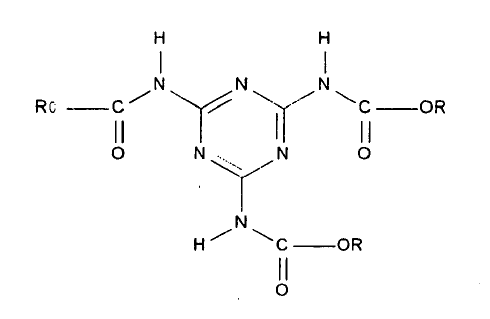

Beispiele für besonders gut geeignete Tris(alkoxycarbonylamino)triazine werden in den Patentschriften US 4,939,213 A 1, US 5,084,541 A 1 oder der EP 0 624 577 A 1 beschrieben. Insbesondere werden die Tris(methoxy-, Tris(butoxy- und/oder Tris(2-ethylhexoxycarbonylamino)triazine (R = Methyl, Butyl oder Ethylhexyl) verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Von den vorstehend beschriebenen Vernetzungsmitteln bieten die blockierten Polyisocyanate besondere Vorteile und werden deshalb erfindungsgemäß ganz besonders bevorzugt verwendet.

Bei dem erfindungsgemäßen Verfahren kann das Verhältnis der Monomeren (A), die komplementäre reaktive funktionelle Gruppen enthalten, zu den Vernetzungsmitteln sehr breit variieren. Erfindungsgemäß ist es von Vorteil, wenn das Molverhältnis von komplementären reaktiven funktionellen Gruppen in (A) zu komplementären reaktiven funktionellen Gruppen in den Vernetzungsmitteln bei 5,0 : 1,0 bis 1,0 : 5,0, bevorzugt 4,0 : 1,0 bis 1,0 : 4,0, besonders bevorzugt 3,0 : 1,0 bis 1,0 : 3,0 und insbesondere 2,0 : 1 bis 1 : 2,0 liegt. Besondere Vorteile resultieren, wenn das Molverhältnis bei etwa oder genau 1,0 : 1,0 liegt.

Für die erfindungsgemäß hergestellten Primärdispersionen und Beschichtungsmittel sowie das erfindungsgemäße Verfahren ist es wesentlich, daß das Monomer oder die Monomeren (A) vor der (Co)Polymerisation zu einer wäßrigen Dispersion mindestens eines der vorstehend beschriebenen Vernetzungsmittel gegeben wird.

In der wäßrigen Dispersion kann die Gesamtmenge der jeweils eingesetzten Vernetzungsmittel, beispielsweise die Gesamtmenge der in einem gegebenen erfindungsgemäß hergestellten Beschichtungsstoff eingesetzten Vernetzungsmittel, oder nur ein Teil hiervon, beispielsweise bis zu 50, vorzugsweise 60, bevorzugt 70, besonders bevorzugt 80, ganz besonders bevorzugt 90 und insbesondere 95 Mol.-%, vorliegen. Erfindungsgemäß ist es von Vorteil, wenn die Gesamtmenge der Vernetzungsmittel in der wäßrigen Dispersion vorliegt.

Der Gehalt der wäßrigen Dispersion an Vernetzungsmittel kann breit variieren und richtet sich in erster Linie nach der Dispergierbarkeit der jeweils verwendeten Vernetzungsmittel. Vorzugsweise liegt er bei 10 bis 80, bevorzugt 15 bis 70, besonders bevorzugt 20 bis 65, ganz besonders bevorzugt 25 bis 60 und insbesondere 30 bis 55 Gew.-%, jeweils bezogen auf die Dispersion.

Die kontinuierliche Phase der Dispersion enthält im wesentlichen Wasser. Hierbei kann das wäßrige Medium außer den vorstehend im Detail beschriebenen Vernetzungsmitteln bereits einen Teil der vorstehend beschriebenen radikalischen Initiatoren und/oder der nachstehend beschriebenen Emulgatoren, Schutzkolloide, hydrophoben Verbindungen und/oder üblichen und bekannten Zusatzstoffe sowie gegebenenfalls sonstige gelöste oder dispergierte, feste, flüssige oder gasförmige, organische und/oder anorganische, nieder- und/oder hochmolekulare Stoffe enthalten, sofern letztere nicht die (Co)Polymerisation in negativer Weise beeinflussen oder gar hemmen. Im Rahmen der vorliegenden Erfindung ist unter dem Begriff "untergeordnete Menge" eine Menge zu verstehen, welche den wäßrigen Charakter des wäßrigen Mediums nicht aufhebt.

Bei dem wäßrigen Medium kann es sich aber auch um reines oder nahezu reines Wasser handeln, was erfindungsgemäß von Vorteil ist. In diesem Fall werden die vorstehend aufgeführten Stoffe, gegebenenfalls inklusive mindestens einem zusätzlichen Vernetzungsmittel, erst mit oder nach der Zugabe der Monomeren (A) zu der wäßrigen Dispersion der Vernetzungsmittel hinzugegeben. Im Rahmen der vorliegenden Erfindung wird unter "nahezu reinem Wasser" Wasser verstanden, das eine untergeordnete Menge, wie vorstehend definiert, an mindestens einem wassermischbaren organischen Cosolvens wie N-Methylpyrrolidon enthält.

Die Menge der Monomeren (A), die in der wäßrigen Dispersion der Vernetzungsmittel dispergiert werden, richtet sich in erster Linie nach dem vorstehend beschriebenen Molverhältnis von komplementären reaktiven funktionellen Gruppen in den Monomeren (A) zu komplementären reaktiven funktionellen Gruppen in den Vernetzungsmitteln. Der Fachmann kann daher die Menge der Monomeren (A), die in einem gegebenen Fall vorzugsweise eingesetzt werden, leicht errechnen.

In erfindungsgemäßer Verfahrensweise wird die resultierende Präemulsion der Monomeren (A) in der wäßrigen Dispersion der Vernetzungsmittel in eine Mikro- oder Miniemulsion, insbesondere einer Miniemulsion, überführt. Hierbei liegt der mittlere Teilchendurchmesser der emulgierten Monomertröpfchen unter 500 nm. Vorzugsweise liegt er bei 10 bis 500 nm, bevorzugt 50 bis 400 nm und ganz besonders bevorzugt 100 bis 300 nm. Bei dem Teilchendurchmesser handelt es sich um den sogenannten z-mittleren Teilchendurchmesser, der mittels der Photonenkorrelationsspektroskopie nach dem Prinzip der dynamischen, quasielastischen Lichtstreuung bestimmt wird. Hierfür kann beispielsweise ein Coulter N4 Plus Particle Analyzer der Firma Coulter Scientific Instruments oder ein PCS Malvern Zetasizer 1000 benutzt werden. Üblicherweise wird die Messung an einer wäßrigen Emulsion, welche 0,01 Gew.-% der emulgierten Monomertröpfchen enthält, durchgeführt. Die wäßrigen Emulsion enthält des weiteren in der wäßrigen Phase die entsprechenden Monomeren in gelöster Form (bis zur Sättigung), damit sich die emulgierten Monomertröpfchen nicht auflösen.

Die Herstellung der Miniemulsion im Rahmen des erfindungsgemäßen Verfahrens weist keine methodischen Besonderheiten auf, sondern erfolgt nach den üblichen und bekannten Verfahren der Dispergierung oder Emulgierung in einem hohen Scherfeld. Beispiele geeigneter Verfahren werden in den Patentschriften DE-A-196 28 142, Seite 5, Zeilen 1 bis 30, DE-A-196 28 143, Seite 7, Zeilen 30 bis 58, oder EP-A-0 401 565, Zeilen 27 bis 51, beschrieben.

Die Monomeren (A) können in der Gegenwart von Emulgatoren und/oder Schutzkolloiden copolymerisiert werden. Beispiele geeigneter Emulgatoren und/oder Schutzkolloide sowie die Mengen, in denen sie vorteilhafterweise angewandt werden, gehen aus der deutschen Patentanmeldung DE-A-196 28 142, Seite 3, Zeilen 8 bis 48, hervor. Es ist ein besonderer Vorteil des erfindungsgemäßen Verfahrens, das vergleichsweise geringe Mengen an Emulgatoren und/oder Schutzkolloiden eingesetzt werden müssen.

Neben den vorstehend beschriebenen erfindungsgemäß zu verwendenden hydrophoben Vernetzungsmitteln können bei der (Co)Polymerisation der erfindungsgemäß zu verwendenden Monomeren (A) auch noch hydrophobe Verbindungen zugegen sein, die sich von den Vernetzungsmitteln stofflich unterscheiden. Diese hydrophoben Verbindungen werden von der Fachwelt auch als Costabilisatoren bezeichnet.

Bei den hydrophoben Verbindungen handelt es sich um wasserunlösliche niedermolekulare, oligomere oder polymere Substanzen. Beispiele geeigneter hydrophober Verbindungen sind Ester von 3 bis 6 Kohlenstoffatomen aufweisenden alpha,beta-monoolefinisch ungesättigten Carbonsäuren mit Alkoholen mit 12 bis 30 Kohlenstoffatomen im Alkylrest; Ester von Vinyl- und/oder Allylalkohol mit 12 bis 30 Kohlenstoffatome im Molekül aufweisenden Alkanmonocarbon-, sulfon- und/oder phosphonsäuren; Amide von 3 bis 6 Kohlenstoffatome aufweisenden alpha,beta-monoolefinisch ungesättigten Carbonsäuren mit Alkylaminen mit 12 bis 30 Kohlenstoffatomen im Alkylrest; Makromomere auf der Basis olefinisch ungesättigter Verbindungen mit im statistischen Mittel mindestens einer, insbesondere endständigen, olefinisch ungesättigten Gruppe im Molekül; Polysiloxanmakromonomere mit im statstischen Mittel mindestens einer, insbesondere endständigen, olefinisch ungesättigten Gruppe im Molekül; oligomere und/oder polymere Polymerisations-, Polykondensations- und/oder Polyadditionsprodukte; wasserunlösliche Molekulargewichtsregler, insbesondere Mercaptane; aliphatische, cycloaliphatische und/oder aromatische halogenierte und/oder nicht halogenierte Kohlenwasserstoffe; Alkanole und/oder Alkylamine mit mindestens 12 Kohlenstoffatomen im Alkylrest: Organosilane und/oder -siloxane; pflanzliche, tierische, halbsynthetische und/oder synthetische Öle; hydrophobe Farbstoffe. Weitere Beispiele geeigneter hydrophober Verbindungen bzw. Costabilisatoren sowie die Mengen, in denen sie vorteilhafterweise angewandt werden, sind aus der deutschen Patentanmeldung DE-A-196 28 142, Seite 4, Zeilen 37 bis 59, bekannt. Es ist ein weiterer besonderer Vorteil des erfindungsgemäßen Verfahrens, daß in vielen Fällen auf die Mitverwendung von hydrophoben Verbindungen verzichtet werden kann.

Hinsichtlich des Molekulargewichts und der Molekulargewichtsverteilung sind die aus den Monomeren (A) gebildeten (Co)Polymerisate keinerlei Beschränkungen unterworfen. Vorteilhafterweise wird aber die (Co)Polymerisation so geführt, daß eine Molekulargewichtsverteilung Mw/Mn gemessen mit Gelpenneationschromatographie unter Verwendung von Polystyrol als Standard von ≤ 12, besonders bevorzugt ≤ 10 und insbesondere ≤ 7 resultiert.

Als Reaktoren für die (Co)Polymerisationsverfahren kommen die üblichen und bekannten Rührkessel, Rührkesselkaskaden, Rohrreaktoren, Schlaufenreaktoren oder Taylorreaktoren, wie sie beispielsweise in den Patentschriften DE 1 071 241 B 1, EP 0 498 583 A 1 oder DE 198 28 742 A 1 oder in dem Artikel von K. Kataoka in Chemical Engineering Science, Band 50, Heft 9, 1995, Seiten 1409 bis 1416, beschrieben werden, in Betracht. Vorzugsweise wird die radikalische (Co)Polymerisation in Rührkesseln oder Taylorreaktoren, durchgeführt, wobei die Taylorreaktoren so ausgelegt werden, daß auf der gesamten Reaktorlänge die Bedingungen der Taylorströmung erfüllt sind, selbst wenn sich die kinematische Viskosität des Reaktionsmediums aufgrund der (Co)Polymerisation stark ändert, insbesondere ansteigt.

Die (Co)Polymerisation wird vorteilhafterweise bei Temperaturen oberhalb der Raumtemperatur durchgeführt, wobei bevorzugt ein Temperaturbereich von 30 bis 95°C, ganz besonders bevorzugt 50 bis 90°C, gewählt wird.

Bei Verwendung besonders leicht flüchtiger Monomere (A) kann die (Co)Polymerisation auch unter Druck, vorzugsweise unter 1,5 bis 3.000 bar, besonders bevorzugt 5 bis 1.500 und insbesondere 10 bis 1.000 bar durchgeführt werden. Hierbei können in Einzelfällen auch höhere Temperaturen als 95°C angewandt werden. Es können hierbei die in der deutschen Patentanmeldung DE-A-196 28 142, Seite 4, Zeilen 6 bis 36, beschriebenen Fahrweisen angewandt werden.

Das erfindungsgemäße Verfahren kann so ausgeführt werden, daß die vorstehend beschriebene bimodale Teilchengrößenverteilung resultiert. Verfahren zur Herstellung bimodaler Teilchengrößenverteilungen sind auf dem hier in Rede stehenden technologischen Gebiet üblich und bekannt. Vorzugsweise wird das in der deutschen Patentanmeldung DE-A-196 28 142, Seite 5, Zeilen 31 bis 49, beschriebene Saat-Verfahren angewandt.

Die erfindungsgemäß hergestellten Primärdispersionen eignen sich als Klebstoffe, Dichtungsmassen und Beschichtungsstoffe oder zu deren Herstellung. Insbesondere eignen sie sich zur Herstellung von Beschichtungsstoffen.

Es ist ein wesentlicher Vorteil der erfindungsgemäß hergestellten Primärdispersionen, daß sie bereits als solche als Klebstoffe, Dichtungsmassen und Beschichtungsstoffe, vorzugsweise als Beschichtungsstoffe, bevorzugt als Füller, Unidecklacke, Wasserbasislacke und Klarlacke und insbesondere als Klarlacke verwendet werden können. Für diese Verwendungszwecke kann den erfindungsgemäß hergestellten Primärdispersionen vor, während und/oder nach ihrer Herstellung noch mindestens ein üblicher und bekannter Zusatzstoff in wirksamen Mengen zugesetzt werden. Hierbei werden vor oder während der Herstellung der Primärdispersionen nur solche Zusatzstoffe zugesetzt, die die Miniemulsionspolymerisation nicht stören oder gar ganz inhibieren. Der Fachmann kann solche Zusatzstoffe anhand seines allgemeinen Fachwissens identifizieren. Vorzugsweise werden die genannten Zusatzstoffe nach der Herstellung der Primärdispersionen zugesetzt.

Beispiele geeigneter Zusatzstoffe sind Pigmente, wie sie in Römpp Lexikon Lacke und Druckfarben, Georg Thieme Verlag, 1998, Seiten 176, »Effektpigmente«; Seiten 380 und 381 »Metalloxid-Glimmer-Pigmente« bis »Metallpigmente«; Seiten 180 und 181, »Eisenblau-Pigmente« bis »Eisenoxidschwarz«; Seiten 451 bis 453, »Pigmente« bis »Pigmentsvolumenkonzentration«; Seite 563, »Thioindigo-Pigmente«; und Seite 567, »Titandioxid-Pigmente«; beschrieben werden. Pigmente werden verwendet, wenn die erfindungsgemäß hergestellten Beschichtungsstoffe als Füller, Unidecklacke oder Wasserbasislacke, insbesondere aber als Wasserbasislacke im Rahmen des sogenannten Naß-in-naß-Verfahrens (vgl. beispielsweise das europäische Patent EP 0 089 497 B 1) zur Herstellung farb- und/oder effektgebender Mehrschichtlackierungen verwendet werden.

Weitere Beispiele geeigneter Zusatzstoffe, die sowohl in den pigmentierten Lacken als auch in den nicht pigmentierten verwendet werden können, sind zusätzliche Bindemittel wie oligomere und polymere, thermisch härtbare, lineare und/oder verzweigte und/oder blockartig, kammartig und/oder statistisch aufgebaute Poly(meth)acrylate oder Acrylatcopolymerisate, insbesondere die in der Patentschrift DE 197 36 535 A 1 beschriebenen, Polyester, insbesondere die in den Patentschriften DE 40 09 858 A 1 oder DE 44 37 535 A 1 beschriebenen, Alkyde, acrylierte Polyester, Polylactone, Polycarbonate, Polyether, Epoxidharz-Amin-Addukte, (Meth)Acrylatdiole, partiell verseifte Polyvinylester, Polyurethane und acrylierte Polyurethane, wie die in den Patentschriften EP 0 521 928 A 1, EP 0 522 420 A 1, EP 0 522 419 A 1, EP 0 730 613 A1 oder DE 44 37 535 A 1 beschriebenen, oder Polyharnstoffe.

Weitere Beispiele geeigneter Zusatzstoffe sind übliche und bekannte Lackadditive wie organische und anorganische Füllstoffe, thermisch härtbare Reaktiverdünner, niedrig siedende und/oder hochsiedende organische Lösemittel ("lange Lösemittel"), UV-Absorber, Lichtschutzmittel, Radikalfänger, thermolabile radikalische Initiatoren, Katalysatoren für die Vernetzung, Entlüftungsmittel, Slipadditive, Polymerisationsinhibitoren, Entschäumer, Emulgatoren, Netzmittel, Haftvermittler, Verlaufmittel, filmbildende Hilfsmittel, rheotogiesteuemde Additive oder Flammschutzmittel. Weitere Beispiele geeigneter Lackadditive werden in dem Lehrbuch »Lackadditive« von Johan Bieleman, Wiley-VCH, Weinheim, New York, 1998, beschrieben.

Sollen die erfindungsgemäß hergestellten Beschichtungsstoffe, Klebstoffe und Dichtungsmassen auch mit aktinischer Strahlung härtbar sein (Dual Cure), enthalten sie Zusatzstoffe, die mit aktinischer Strahlung härtbar sind. Bei der aktinischen Strahlung kann es sich um elektromagnetische Strahlung wie nahes Infrarot (NIR), sichtbares Licht, UV-Licht oder Röntgenstrahlung oder um Korpuskularstrahlung wie Elektronenstrahlung handeln. Beispiele geeigneter mit aktinischer Strahlung härtbarer Zusatzstoffe sind aus dem deutschen Patent DE 197 09 467 C 1 bekannt.

Methodisch weist die Applikation der erfindungsgemäß hergestellten Beschichtungsstoffe. Klebstoffe und Dichtungsmassen keine Besonderheiten auf, sondern kann durch alle üblichen Applikationsmethoden, wie z.B. Spritzen, Rakeln, Streichen, Gießen, Tauchen, Träufeln oder Walzen erfolgen. Vorzugsweise werden bei den erfindungsgemäß hergestellten Beschichtunsstoffen Spritzapplikationsmethoden angewandt, wie zum Beispiel Druckluftspritzen, Alriess-Spritzen, Hochrotation, elektrostatischer Sprühauftrag (ESTA), gegebenenfalls verbunden mit Heißspritzapplikation wie zum Beispiel Hot-Air- Heißspritzen.

Als Substrate kommen alle zu lackierenden Oberflächen, die durch eine Härtung der hierauf befindlichen Beschichtungsstoffe, Klebstoffe und Dichtungsmassen unter Anwendung von Hitze sowie gegebenenfalls aktinischer Strahlung nicht geschädigt werden, in Betracht; das sind z. B. Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel, sowie Verbunde dieser Materialien.

Demnach kommen insbesondere die erfindungsgemäß hergestellten Beschichtungsstoffe in hohem Maße für Anwendungen in der Automobillackierung, insbesondere der Automobilerstlackierung (OEM), der Lackierung von Möbeln, Türen oder Fenstern, der Beschichtung von Bauwerken im Innen- und Außenbereich oder die industrielle Lackierung, inklusive Coil Coating, Container Coating und die Imprägnierung oder Beschichtung elektrotechnischer Bauteile, in Betracht. Im Rahmen der industriellen Lackierungen eignet er sich für die Lackierung praktisch aller Teile für den privaten oder industriellen Gebrauch wie Radiatoren, Haushaltsgeräte, Kleinteile aus Metall wie Schrauben und Muttern, Radkappen, Felgen, Emballagen oder elektrotechnische Bauteile wie Motorwicklungen oder Transformatorwicklungen.

Auch die erfindungsgemäß hergestellten Klebstoffe und Dichtungsmassen können mit Vorteil in den vorstehend beschriebenen technischen Anwendungsgebieten verwendet werden.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht. Im Falle von nichtfunktionalisierten und/oder unpolaren Kunststoffoberflächen können diese vor der Beschichtung in bekannter Weise einer Vorbehandlung, wie mit einem Plasma oder mit Beflammen, unterzogen oder mit einer Hydrogrundierung versehen werden.

Auch die Härtung der applizierten erfindungsgemäß hergestellten Beschichtungsstoffe, Klebstoffe und Dichtungsmassen weist keine methodischen Besonderheiten auf, sondern erfolgt nach den üblichen und bekannten thermischen Methoden wie Erhitzen in einem Umluftofen oder Bestrahlen mit IR-Lampen, die im Falle von Dual Cure noch durch die Bestrahlung mit aktinischer Strahlung ergänzt werden kann. Hierbei können Strahlenquellen wie Quecksilberhoch- oder - niederdruckdampflampen, welche gegebenenfalls mit Blei dotiert sind, um ein Strahlenfenster bis zu 405 nm zu öffnen, oder Elektronenstrahlquellen angewandt werden.

Die resultierenden erfindungsgemäß hergestellten Beschichtungen, insbesondere die erfindungsgemäßen ein- oder mehrschichtigen farb- und/oder effektgebenden Lackierungen und Klarlackierungen sind einfach herzustellen und weisen hervorragende optische Eigenschaften und eine sehr hohe Chemikalien- und Witterungsbeständigkeit auf. Demgemäß sind auch die Substrate, die mindestens eine erfindungsgemäß hergestellte Beschichtung enthalten, von einem besonders hohen Gebrauchswert und einer besonders langen Gebrauchsdauer, was sie für Hersteller und Anwender wirtschaftlich und technisch besonders attraktiv macht.

Auch die aus den erfindungsgemäß hergestellten Klebstoffen und Dichtungsmassen hergestellten Klebschichten und Dichtungen weisen hervorragende anwendungstechnische Eigenschaften wie eine hohe Haftung und vollständige Abdichtung unter klimatisch extremen Bedingungen auch bei starken Temperatur- und Feuchtigkeitsschwankungen auf, so daß die hiermit verklebten und/oder abgedichteten Substrate gleichfalls von besonderem wirtschaftlichen und technischen Wert sind.

Dies gilt um so mehr für Substrate, die mit den erfindungsgemäß hergestellten Beschichtungen. Klebschichten und Dichtungen beschichtet, verklebt und abgedichtet sind.

### Beispiele 1 bis 3

### Die Herstellung von Primärdispersionen und Beschichtungen nach dem erfindungsgemäßen Verfahren

Für die Durchführung der Beispiele 1 bis 3 wurde jeweils eine Mischung von Monomeren (A) in einer wäßrigen Dispersion eines blockierten Polyisocyanats dispergiert. Die resultierenden Präemulsionen wurden in einem Ultraturrax während 30 s bei 10.000 U/min in feinteilige Miniemulsionen überführt. Bei Beispiel 2 wurde zusätzlich noch ein Düsenstrahldispergator verwendet. Überraschenderweise zeigte es sich, daß hierauf verzichtet werden konnte, weil bereits die Homogenisierung im Ultraturrax die gewünschten Miniemulsionen lieferte.

Die Tabelle 1 gibt einen Überblick über die verwendeten Ausgangsprodukte der Miniemulsionen, die Mengen, in denen sie eingesetzt wurden, sowie den z-mittleren Teilchendurchmesser der Monomertröpfchen, der mittels der Photonenkorrelationsspektroskopie nach dem Prinzip der dynamischen, quasielastischen Lichtstreuung mit einem PCS Malvern Zetasizer 1000 bestimmt wurde.

Die Miniemulsionen wurde in einen geeigneten Stahlreaktor überführt und unter Rühren langsam auf 70 oder 80°C erwärmt. Die Miniemulsionen wurden bei dieser Temperatur so lange gerührt, bis der Feststoffgehalt der resultierenden erfindungsgemäßen Primärdispersionen nicht mehr länger anstieg. Die erfindungsgemäßen Primärdispersionen waren nahezu oder völlig frei von Koagulaten und über mehrere Wochen absetzstabil.

Die Tabelle 1 gibt einen Überblick über die Polymerisationsdauer, die nach Fox errechnete theoretische Glasübergangstemperatur Tg der in den erfindungsgemäßen Primärdispersionen enthaltenen (Co)Polymerisate, ihre Hydroxylzahl sowiwe den z-mittleren Teilchendurchmesser (gemessen mit einem PCS Malvern Zetasizer 1000), den Feststoffgehalt, den Siebrückstand und den Bodensatz der erfindungsgemäß hergestellten Primärdispersionen.

Die erfindungsgemäß hergestellten Primärdispersionen wurden mit Hilfe des handelsüblichen Verdickers Collacral® VL der Firma BASF Aktiengesellschaft auf eine Auslaufzeit im DIN 4-Auslaufbecher von 24 s eingestellt, mit einer Naßfilmdicke von 150 µm auf Glasplatten aufgerakelt und während 30 Minuten bei 145°C, 160°C und 180°C eingebrannt. Die in der Tabelle 1 aufgeführten Ergebnisse des Methylethylketon-Tests belegen, daß die resultierenden harten und klaren erfindungsgemäß hergestellten Beschichtungen eine besonders hohe Lösemittelstabilität aufwiesen.

**Tabelle 1: Stoffliche Zusammensetzung und Eigenschaften der erfindungsgemäß hergestellten Miniemulsionen, Polymerisationsbedingungen, stoffliche Zusammensetzung und Eigenschaften der erfindungsgemäß hergestellten Primärdispersionen sowie die Lösemittelstabilität der erfindungsgemäß hergestellten Beschichtungen**

| **Beispiel** | **1** | **2** | **3** |
|---|---|---|---|
| Miniemulsion: | | | |
| Zusammensetzung (Gewichtsteile): | | | |
| Methylmethacrylat | 26 | 26 | 26 |
| n-Butylmethacrylat | 31 | 31 | 3 1 |
| Styrol | 13 | 13 | 13 |
| Hydroxypropylmethacrylat | 28 | 28 | 28 |
| Diphenylethylen | 2 | 2 | 2 |
| Dispersion des blockierten | | | |
| Polyisocyanats ^{a)} | 368,3 | 368,3 | 368,3 |
| Zusätzliches blockiertes | | | |
| Polyisocyanat ^{b)} | 5 | - | - |
| Verhältnis OH : NCO | 1 : 1 | 1 : 1 | 1 : 1 |
| Teilchendurchmesser (nm) | 149/147 | 134/137 | 137/138 |

| Polymerisation: | | | |
|---|---|---|---|
| Initiator ^{c)} (Gewichtsteile pro 100 | | | |
| Gewichtsteile Monomermischung | | | |
| und blockiertes Polyisocyanat) | 5 | 5 | 5 |
| Polymerisationsdauer | 7h 40min | 6h 50min | 6h 20min |

| Primärdispersion: | | | |
|---|---|---|---|
| Feststoffgehalt ^{d)} (Gew.-%) | 35,9 | 37,8 | 37,6 |
| Teilchendurchmesser (nm) | 148/144 | 143/144 | 147/140 |
| Siebrückstand naß/trocken (g) | 1,5 | 3 | 3 |
| Bodensatz naß (%) | <0,1 | 0,75 | 0,75 |

| Copolymerisat: | | | |
|---|---|---|---|
| Glasübergangstemperatur | | | |
| (theoretisch nach Fox) (°C) | 29,17 | 29,17 | 29,17 |
| Hydroxylzahl (mg KOH/g) | 109 | 109 | 109 |

| Klarlackierung: | | | |
|---|---|---|---|
| MEK-DH^{e)} | >200 | >200 | >200 |

| | | | |
|---|---|---|---|
| a) Trixene® BI 7986 der Firma Baxenden; wäßrige Dispersion des Isocyanurats von Hexamethylendiisocyanat, blockiert mit 3,5- Dimethylpyrazol, Festkörpergehalt 40 Gew.-%, Gehalt an N-Methylpyrrolidon: 6,5 Gew.-%, NCO-Gehalt (blockiert): 5 Gew.-%; b) mit Dimethylpyrazol blockiertes handelsübliches Polyisocyanat auf der Basis von Isophorondiisocyanat, N-Methylpyrrolidon-Gehalt der Dispersion: 6,5 Gew.-%, NCO-Gehalt (blockiert) der Dispersion: 15,5 Gew.-%; c) tert.- Butylperoxyethylhexanoat; d) 130 °C, eine Stunde; e) Anzahl der Doppelhübe mit einem mit Methylethylketon getränkten Wattebausch; | | | |

## Patentansprüche

1. Verfahren zur Herstellung wäßriger Primärdispersionen und Beschichtungsstoffe, enthaltend dispergierte und/oder emulgierte, feste und/oder flüssige Polymerpartikel und/oder dispergierte feste Kern-Schale-Partikel eines Teilchendurchmesser ≤ 500 nm, bei dem man mindestens ein olefinisch ungesättigtes Monomer (A) in der Gegenwart von zumindest einem hydrophoben Vernetzungsmittel für das aus dem Monomer oder den Monomeren (A) resultierende (Co)Polymerisat in einer Mikro- oder Miniemulsion radikalisch (co)polymerisiert, **dadurch gekennzeichnet, daß** man das Monomer oder die Monomeren (A) vor der (Co)Polymerisation in einer wäßrigen Dispersion des Vernetzungsmittels oder der Vernetzungsmittel dispergiert.

2. Verfahren nach Anspruch 1, **dadurch gekennzeichnet, daß** das Monomer (A) oder mindestens eines der Monomeren (A) mindestens eine reaktive funktionelle Gruppe enthält, die mit den komplementären reaktiven funktionellen Gruppen des Vernetzungsmittels Vemetzungsreaktionen eingehen kann.

3. Verfahren nach Anspruch 1 oder 2, **dadurch gekennzeichnet, daß** als Monomere (A)
a1) im wesentlichen säuregruppenfreien (Meth)acrylsäureester;
a2) Monomere, welche mindestens eine Hydroxyl-, Thio-, Amino-, Alkoxymethylamino-, Carbamat-, Allophanat- oder Iminogruppe, insbesondere eine Hydroxyl-, Amino- oder Alkoxymethylaminogruppe, pro Molekül tragen und im wesentlichen säuregruppenfrei sind;
a3) Monomere, welche mindestens eine Säuregruppe, die in die entsprechende Säureaniongruppe überführbar ist, pro Molekül tragen;
a4) Vinylester von in alpha-Stellung verzweigten Monocarbonsäuren mit 5 bis 18 Kohlenstoffatome im Molekül;
a5) Umsetzungsprodukte aus Acrylsäure und/oder Methacrylsäure mit dem Glycidylester einer in alpha-Stellung verzweigten Monocarbonsäure mit 5 bis 18 C-Atomen je Molekül;
a6) cyclische und/oder acyclische Olefine;
a7) (Meth)Acrylsäureamide;
a8) Epoxidgruppen enthaltende Monomere;
a9) vinylaromatische Kohlenwasserstoffe;
a10) Diarylethylene;
a11) Nitrile;
a12) Vinylverbindungen, insbesondere Vinyl- und/oder Vinylidendihalogenide, N-Vinylamide, Vinylether und/oder Vinylester;
a13) Allylverbindungen, insbesondere Allylether und -ester;
a14) Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; und/oder
a15) Acryloxysilan-enthaltende Vinylmonomere, herstellbar durch Umsetzung hydroxyfunktioneller Silane mit Epichlorhydrin und anschließender Umsetzung des Reaktionsproduktes mit Methacrylsäure und/oder Hydroxyalkylestern der (Meth) acrylsäure;
verwendet werden, mit der Maßgabe, daß die Monomeren (a3) und (a10) nicht als die alleinigen Monomeren (A) verwendet werden.

4. Verfahren nach Anspruch 3, **dadurch gekennzeichnet, daß** man als Monomer (a10) mindestens ein Diarylethylen der allgemeinen Formel I
R¹R²C=CR³R⁴ (I),
worin die Reste R¹, R² , R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
verwendet.

5. Verfahren nach Anspruch 4, **dadurch gekennzeichnet, daß** es sich bei den Arylresten R¹, R², R³ und/oder R⁴ der Monomeren (a10) um Phenyl- oder Naphthylreste, insbesondere Phenylreste, handelt.

6. Verfahren nach Anspruch 4 oder 5, **dadurch gekennzeichnet, daß** die Substituenten in den Resten R¹, R², R³ und/oder R⁴ der Monomeren (a10) elektronenziehende oder elektronenschiebende Atome oder organische Reste, insbesondere Halogenatome, Nitril-, Nitro-, partiell oder vollständig halogenierte Alkyl-, Cycloalkyl-, Alkylcycloalkyl-, Cycloalkylalkyl-, Aryl-, Alkylaryl-, Cycloalkylaryl- Arylalkyl- und Arylcycloalkylreste; Aryloxy-, Alkyloxy- und Cycloalkyloxyreste; Arylthio-, Alkylthio- und Cycloalkylthioreste und/oder primäre, sekundäre und/oder tertiäre Amionogruppen sind.

7. Verfahren nach einem der Ansprüche 1 bis 6, **dadurch gekennzeichnet, daß** als Vernetzungsmittel blockierte Polyisocyanate, Tris (alkoxycarbonylamino)triazine und/oder vollständig veretherte Aminoplastharze verwendet werden.

8. Verfahren nach Anspruch 7, **dadurch gekennzeichnet, daß** als blockierte Polyisocyanate mit 3,5-Dimethylpyrazol blockierte Polyisocyanate verwendet werden.

9. Verfahren nach einem der Ansprüche 1 bis 8, **dadurch gekennzeichnet, daß** das Monomer oder die Monomeren (A) in der Gegenwart von Emulgatoren und/oder Schutzkolloiden (co)polymerisiert wird oder werden.

10. Verfahren nach einem der Ansprüche 1 bis 9, **dadurch gekennzeichnet, daß** das Monomer oder die Monomeren (A) in der Gegenwart mindestens einer weiteren, von dem Vernetzungsmittel verschiedenen hydrophoben Verbindung (co)polymerisiert wird oder werden.

11. Verfahren nach einem der Ansprüche 1 bis 10, **dadurch gekennzeichnet, daß** die dispergierten Kern-Schale-Partikel Kerne aus organischen Feststoffen und Schalen aus (Co)Polymerisaten, welche mindestens ein Monomer (A) einpolymerisiert enthalten, bestehen.

12. Verfahren nach einem der Ansprüche 1 bis 11, **dadurch gekennzeichnet, daß** die Kerne der Kern-Schale-Partikel durch radikalische Mikro- oder Miniemulsionspolymerisation hergestellt werden.

13. Verwendung der nach dem Verfahren gemäß einem der Ansprüche 1 bis 12 hergestellten wäßrigen Primärdispersionen und Beschichtungsstoffe in der Automobilerst- und -reparaturlackierung, der industriellen Lackierung, inclusive Coil Coating, Container Coating und der Beschichtung elektrotechnischer Bauteile, der Beschichtung von Bauwerken im Innen- und Außenbereich, der Fenster- und Türlackierung und der Möbellackierung.

14. Grundierte oder ungrundierte Substrate, enthaltend mindestens eine ein- oder mehrschichtige Klarlackierung und/oder mindestens eine ein- oder mehrschichtige farb- und/oder effektgebende Lackierung auf der Basis der nach dem Verfahren gemäß einem der Ansprüche 1 bis 12 hergestellten wäßrigen Primärdispersionen und Beschichtungsstoffe.

## Claims

1. Process for preparing aqueous primary dispersions or coating materials comprising dispersed and/or emulsified, solid and/or liquid polymer particles and/or dispersed solid core-shell particles having a diameter ≤ 500 nm, in which at least one olefinically unsaturated monomer (A) is subjected to free-radical (co)polymerization in a microemulsion or miniemulsion in the presence of at least one hydrophobic crosslinking agent for the (co)polymer resulting from the monomer or monomers (A), **characterized in that** said monomer or monomers (A) is or are dispersed prior to (co)polymerization in an aqueous dispersion of said crosslinking agent or agents.

2. Process according to Claim 1, **characterized in that** said monomer (A), or at least one of said monomers (A), comprises at least one reactive functional group which is able to enter into crosslinking reactions with the complementary reactive functional groups of said crosslinking agent.

3. Process according to Claim 1 or 2, **characterized in that** monomers (A) used are
a1) essentially acid-group-free (meth)acrylic esters;
a2) monomers which carry per molecule at least one hydroxyl, thio, amino, alkoxymethylamino, carbamate, allophanate or imino group, in particular a hydroxyl, amino or alkoxymethylamino group, and are essentially free from acid groups;
a3) monomers which carry per molecule at least one acid group which can be converted to the corresponding acid anion group;
a4) vinyl esters of alpha-branched monocarboxylic acids having 5 to 18 carbon atoms in the molecule;
a5) reaction products of acrylic acid and/or methacrylic acid with the glycidyl ester of an alpha-branched monocarboxylic acid having 5 to 18 carbon atoms per molecule;
a6) cyclic and/or acyclic olefins;
a7) (meth)acrylamides;
a8) monomers containing epoxide groups;
a9) vinylaromatic hydrocarbons;
a10) diarylethylenes;
a11) nitriles;
a12) vinyl compounds, especially vinyl halides and/or vinylidene dihalides, N-vinylamides, vinyl ethers and/or vinyl esters;
a13) allyl compounds, especially allyl ethers and allyl esters;
a14) polysiloxane macromonomers having a number-average molecular weight Mn of from 1000 to 40,000 and having on average from 0.5 to 2.5 ethylenically unsaturated double bonds per molecule; and/or
a15) acryloxysilane-containing vinyl monomers, preparable by reacting hydroxy-functional silanes with epichlorohydrin and then reacting the reaction product with methacrylic acid and/or hydroxyalkyl esters of (meth)acrylic acid;
with the proviso that the monomers (a3) and (a10) are not used as sole monomers (A).

4. Process according to Claim 3, **characterized in that** said monomer (a10) comprises at least one diarylethylene of the general formula I
**R¹R²C=CR³R⁴** (I)
in which the radicals R¹, R², R³ and R⁴ independently of one another are hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals, with the proviso that at least two of the variables R¹, R², R³ and R⁴ are substituted or unsubstituted aryl, arylalkyl or arylcycloalkyl radicals, especially substituted or unsubstituted aryl radicals.

5. Process according to Claim 4, **characterized in that** said aryl radicals R¹, R², R³ and/or R⁴ of the monomers (a10) are phenyl or naphthyl radicals, especially phenyl radicals.

6. Process according to claim 4 or 5, **characterized in that** the substituents in the radicals R¹, R², R³ and/or R⁴ of the monomers (a10) are electron-withdrawing or electron-donating atoms or organic radicals, especially halogen atoms, nitrile radicals, nitro radicals, partially or fully halogenated alkyl, cycloalkyl, alkylcycloalkyl, cycloalkylalkyl, aryl, alkylaryl, cycloalkylaryl, arylalkyl and arylcycloalkyl radicals; aryloxy, alkyloxy and cycloalkyloxy radicals; arylthio, alkylthio and cycloalkylthio radicals and/or primary, secondary and/or tertiary amino groups.

7. Process according to any of Claims 1 to 6, **characterized in that** said crosslinking agents comprise blocked polyisocyanates, tris(alkoxycarbonylamino)triazines and/or fully etherified amino resins.

8. Process according to Claim 7, **characterized in that** said blocked polyisocyanates are 3,5-dimethylpyrazole-blocked polyisocyanates.

9. Process according to any of Claims 1 to 8, **characterized in that** said monomer or monomers (A) is or are (co)polymerized in the presence of emulsifiers and/or protective colloids.

10. Process according to any of Claims 1 to 9, **characterized in that** said monomer or monomers (A) is or are (co)polymerized in the presence of at least one further hydrophobic compound other than the crosslinking agent.

11. Process according to any of Claims 1 to 10, **characterized in that** the dispersed core-shell particles comprise cores of organic solids and shells of (co)polymers containing at least one monomer (A) in copolymerized form.

12. Process according to any of Claims 1 to 11, **characterized in that** the cores of the core-shell particles are prepared by free-radical microemulsion or miniemulsion polymerization.

13. Use of the aqueous primary dispersions or coating materials prepared by the process according to any of Claims 1 to 12 in automotive OEM finishing and refinishing, industrial coating, including coil coating, container coating and the coating of electrical components, interior and exterior architectural coating, window and door coating, and furniture coating.

14. Primed or unprimed substrates comprising at least one single-coat or multicoat transparent finish and/or at least one single-coat or multicoat color and/or effect finish based on the aqueous primary dispersions or coating materials prepared by the process according to any of Claims 1 to 12.

## Revendications

1. Procédé de préparation de dispersions primaires et de substances de revêtement aqueuses, contenant des particules polymères dispersées et/ou émulsionnées, solides et/ou liquides et/ou des particules à noyau-coquille dispersées, solides présentant un diamètre de particule ≤ 500 nm, dans lequel on (co)polymérise par voie radicalaire au moins un monomère oléfiniquement insaturé (A) en présence d'au moins un réticulant hydrophobe pour le (co)polymère résultant du ou des monomères (A) dans une microémulsion ou une mini-émulsion, **caractérisé en ce qu'**on disperse le ou les monomères (A), avant la (co)polymérisation dans une dispersion aqueuse du ou des réticulants.

2. Procédé selon la revendication 1, **caractérisé en ce que** le monomère (A) ou au moins un des monomères (A) contient au moins un groupe fonctionnel réactif, qui peut participer à des réactions de réticulation avec les groupes fonctionnels réactifs complémentaires du réticulant.

3. Procédé selon la revendication 1 ou 2, **caractérisé en ce qu'**on utilise comme monomères (A)
a1) des esters de l'acide (méth)acrylique essentiellement exempts de groupes acides ;
a2) des monomères qui portent au moins un groupe hydroxyle, thio, amino, alcoxyméthylamino, carbamate, allophanate ou imino, en particulier un groupe hydroxyle, amino ou alcoxyméthylamino par molécule et qui sont essentiellement exempts de groupes acides ;
a3) des monomères qui portent au moins un groupe acide qui peut être transformé en groupe anion d'acide correspondant par molécule ;
a4) des esters vinyliques d'acides monocarboxyliques ramifiés en position alpha, comprenant 5 à 18 atomes de carbone dans la molécule ;
a5) des produits de transformation de l'acide acrylique et/ou de l'acide méthacrylique avec l'ester glycidylique d'un acide monocarboxylique ramifié en position alpha comprenant 5 à 18 atomes de carbone par molécule ;
a6) des oléfines cycliques et/ou acycliques ;
a7) des amides de l'acide (méth)acrylique ;
a8) des monomères contenant des groupes époxyde ;
a9) des hydrocarbures vinylaromatiques ;
a10) des diaryléthylènes ;
a11) des nitriles ;
a12) des composés de vinyle, en particulier des dihalogénures de vinyle et/ou de vinylidène, des N-vinylamides, des vinyléthers et/ou des esters de vinyle ;
a13) des composés d'allyle, en particulier des allyléthers et des esters d'allyle ;
a14) des macromonomères de polysiloxane, qui présentent un poids moléculaire numérique moyen Mn de 1 000 à 40 000 et en moyenne 0,5 à 2,5 doubles liaisons éthyléniquement insaturées par molécule ; et/ou
a15) des monomères de vinyle contenant de l'acryloxysilane, pouvant être préparés par transformation de silanes à fonctionnalité hydroxy avec de l'épichlorhydrine et transformation consécutive du produit de réaction avec de l'acide méthacrylique et/ou des esters hydroxyalkyliques de l'acide (méth)acrylique ;
à condition que les monomères (a3) et (a10) ne soient pas utilisés comme monomères (A) uniques.

4. Procédé selon la revendication 3, **caractérisé en ce qu'**on utilise comme monomère (a10) au moins un diaryléthylène de formule générale I
R¹R²C=CR³R⁴ (I),
dans laquelle les radicaux R¹, R², R³ et R⁴ représentent, à chaque fois indépendamment l'un de l'autre, des atomes d'hydrogène ou des radicaux alkyle, cycloalkyle, alkylcycloalkyle, cycloalkylalkyle, aryle, alkylaryle, cycloalkylaryle, arylalkyle ou arylcycloalkyle, substitués ou non substitués, à condition qu'au moins deux des variables R¹, R², R³ et R⁴ représentent des radicaux aryle, arylalkyle ou arylcycloalkyle, substitués ou non substitués, en particulier des radicaux aryle substitués ou non substitués.

5. Procédé selon la revendication 4, **caractérisé en ce qu'**il s'agit, pour les radicaux aryle R¹, R², R³ et/ou R⁴ des monomères (a10) de radicaux phényle ou naphtyle, en particulier de radicaux phényle.

6. Procédé selon la revendication 4 ou 5, **caractérisé en ce que** les substituants dans les radicaux R¹, R², R³ et/ou R⁴ des monomères (a10) sont des atomes ou des radicaux organiques attirant ou déplaçant les électrons, en particulier des atomes d'halogène, des radicaux nitrile, nitro, des radicaux alkyle, cycloalkyle, alkylcycloalkyle, cycloalkylalkyle, aryle, alkylaryle, cycloalkylaryle, arylalkyle et arylcycloalkyle, partiellement ou totalement halogénés ; des radicaux aryloxy, alkyloxy et cycloalkyloxy ; des radicaux arylthio, alkylthio et cycloalkylthio et/ou des groupes amino primaires, secondaires et/ou tertiaires.

7. Procédé selon l'une quelconque des revendications 1 à 6, **caractérisé en ce qu'**on utilise comme réticulants des polyisocyanates bloqués, des tris(alcoxycarbonylamino)triazines et/ou des résines aminoplastes complètement éthérées.

8. Procédé selon la revendication 7, **caractérisé en ce qu'**on utilise comme polyisocyanates bloqués des polyisocyanates bloqués par du 3,5-diméthylpyrazole.

9. Procédé selon l'une quelconque des revendications 1 à 8, **caractérisé en ce que** le ou les monomères (A) sont (co)polymérisés en présence d'émulsifiants et/ou de colloïdes de protection.

10. Procédé selon l'une quelconque des revendications 1 à 9, **caractérisé en ce que** le ou les monomères (A) sont (co)polymérisés en présence d'au moins un autre composé hydrophobe différent du réticulant.

11. Procédé selon l'une quelconque des revendications 1 à 10, **caractérisé en ce que** les particules à noyau-coquille dispersées sont constituées par des noyaux en solides organiques et des coquilles en (co)polymères, qui contiennent au moins un monomère (A) sous forme copolymérisée.

12. Procédé selon l'une quelconque des revendications 1 à 11, **caractérisé en ce que** les noyaux des particules à noyau-coquille sont préparés par une polymérisation par voie radicalaire dans une microémulsion ou une mini-émulsion.

13. Utilisation des dispersions primaires et des substances de revêtement aqueuses préparées selon le procédé selon l'une quelconque des revendications 1 à 12 dans le premier laquage et le laquage de réparation de voitures, le laquage industriel, y compris le laquage de bobines, le laquage de conteneurs et le revêtement de pièces électrotechniques, le revêtement de constructions à l'intérieur et à l'extérieur, le laquage des fenêtres et des portes et le laquage des meubles.

14. Substrats apprêtés ou non apprêtés, contenant au moins un laquage clair à une ou plusieurs couches et/ou au moins un laquage coloré et/ou conférant un effet à une ou plusieurs couches à base des dispersions primaires et des substances de revêtements aqueuses préparées selon le procédé selon l'une quelconque des revendications 1 à 12.
